# EUROPEAN PATENT SPECIFICATION

(11) **EP 1 548 897 B1**
(45) Date of publication and mention of the grant of the patent: **08.11.2006**
(21) Application number: 04030632.6
(22) Date of filing: 23.12.2004
(51) Int. Cl.: H01R 13/633

(54) **Card connector that can prevent both leaping-out and ejection failure of a card**
Kartenverbinder, der sowohl Herausfallen als auch Auswurffehler einer Karte vermeiden kann.
Connecteur de cartes qui peut éviter des erreurs d'éjection et chute accidentelle d'une carte.

(30) Priority: 26.12.2003 JP 2003433079
(43) Date of publication of application: 29.06.2005
(73) Proprietor: JAPAN AVIATION ELECTRONICS INDUSTRY, LIMITED, Shibuya-ku Tokyo (JP)
(72) Inventor: Kodera, Masafumi, Shibuya-ku Tokyo (JP); Motojima, Joe, Shibuya-ku Tokyo (JP); Natori, Akira, Shibuya-ku Tokyo (JP); Suzuki, Keiichiro, Shibuya-ku Tokyo (JP)
(74) Representative: Hofer, Dorothea

(56) References cited:
- US-A1- 2001 055 896

## Description

### Background of the Invention:

This invention relates to a card connector for connection to a card such as an integrated circuit card (which will often be called hereunder an IC card).

In a card connector having a so-called W-Push function that alternately repeats loading and ejection of a card every time the card is pushed, the card is forcibly ejected by a load which is obtained by pushing the card to deform a coil spring.

There is, however, a problem that the card leaps out of the connector depending on a manipulation manner.

As a countermeasure, a method is generally employed wherein a brake is provided in a card connector to exert a frictional force on a card to thereby prevent the card from leaping out of the connector.

Japanese Patent No. 3383917 (JP-B) (hereinafter referred to as Reference Document 1) describes a card connector comprising a housing and a cover covering it. At one side in the housing, the connector further comprises, as a card ejecting mechanism, an L-shaped ejecting bar and a coil spring biasing the ejecting bar toward the front end of the connector. A distal bent end portion of the L-shaped ejecting bar engages with an insertion-side end of a card so that the ejecting bar moves toward the rear end of the connector following the insertion of the card.

Every time the card is pushed for loading or ejection thereof, a heart-cam mechanism causes the ejecting bar to alternately repeat a locked state where the ejecting bar is stopped at the rear end against a biasing force of the coil spring and an unlocked state where the ejecting bar is moved forward by the biasing force of the coil spring.

The cover is provided with a plate-like brake formed by cutting. The brake has elasticity and is pushed up outward by the card upon insertion thereof so as to be in constant sliding contact with one surface of the card. When ejecting the card from the connector, the brake continues to apply a frictional force to the card while slidingly contacting the card, to thereby prevent the card from leaping out of the connector.

In the foregoing card connector, however, there may arise a problem that when the frictional force is greater than the force to eject the card achieved by the coil spring, the card is not fully ejected and stops inside the connector. In view of this, it has been difficult to increase the braking force to thereby suppress the leaping-out of the card.

Similarly, Japanese Utility Model Registration (JP-Y) No. 2568489, Japanese Utility Model Registration (JP-Y) No. 2597283, and Japanese Utility Model Application Publication (JP-U) No. H05-66768 (hereinafter referred to as Reference Document 2, Reference Document 3, and Reference Document 4, respectively) each discloses a card connector having a brake. This card connector has a structure wherein a card is ejected via a lever by pushing a button. Specifically, a lock or brake is provided at a portion where the card is guided, and braking is achieved by sandwiching the card between the brake and a card guide. Since the braking serves as a frictional force against a force to eject the card or a force to push the button, there is possibility of occurrence of ejection failure.

US 2001/0055896 A1 discloses a card connector according to the preamble of claim 1.

On the other hand, Japanese Patent Application Publication (JP-A) No. H11-53486 (hereinafter referred to as Reference Document 5) describes a structure wherein a card is ejected by directly manipulating an eject lever. Braking is achieved by sandwiching the card between a lock or brake and a portion serving to guide the card. Since the braking serves as a frictional force against a force to eject the card or a force to manipulate the eject lever, there is possibility of occurrence of ejection failure.

### Summary of the Invention:

It is therefore an object of this invention to provide a card connector that can prevent both leaping-out and ejection failure of a card.

The object is solved by a card connector according to claim 1.

### Brief Description of the Drawing:

Fig. 1A is a plan view showing one example of a conventional card connector;
Fig. 1B is a sectional view taken along line IB-IB in Fig. 1A;
Fig. 2 is a perspective view showing an overall structure of a card connector according to a preferred embodiment of this invention;
Fig. 3 is a perspective view of the card connector shown in Fig. 2 with a cover removed;
Fig. 4 is a partial perspective view showing a portion of the card connector shown in Fig. 2 in the neighborhood of a brake engaging with an ejecting bar;
Fig. 5 is a partial exploded perspective view of a card ejecting mechanism of the card connector shown in Fig. 2;
Fig. 6 is a sectional view of the card connector shown in Fig. 2 for describing operation of the brake, which shows the state before insertion of a card or after ejection of the card; and
Fig. 7 is a sectional view of the card connector shown in Fig. 2 for describing operation of the brake, which shows the state where the card is loaded.

### Description of the Preferred Embodiment:

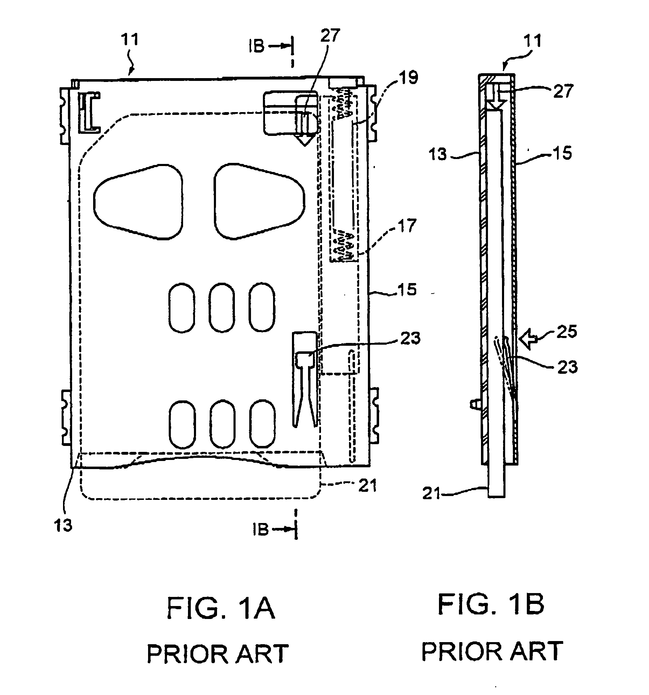

In order to facilitate understanding of this invention, a conventional card connector will first be described with reference to Figs. 1A and 1 B prior to describing a preferred embodiment of this invention.

As illustrated in Figs. 1A and 1B, a card connector 11 according to Reference Document 1 comprises a housing 13 and a cover 15 covering it. At one side in the housing 13, an L-shaped ejecting bar 17 is provided and biased by a coil spring 19 toward the front end of the connector 11 as indicated by an arrow 27. A projecting portion of the L-shaped ejecting bar 17 is adapted to engage with an insertion-side end of a card 21 so that the ejecting bar 17 moves toward the rear end of the connector 11 following the insertion of the card 21. The cover 15 is provided with a brake 23 that is formed by cutting so as to be inclined toward the inside of the connector 11. Every time the card 21 is pushed for loading or ejection thereof, a heart-cam mechanism (not illustrated) causes the ejecting bar 17 to alternately repeat a locked state where the ejecting bar 17 is stopped at the rear end against a biasing force of the coil spring 19 and an unlocked state where the ejecting bar 17 is moved forward by the biasing force of the coil spring 19.

The brake 23 has elasticity and is pushed up outward by the card 21 upon insertion thereof so as to be in constant sliding contact with one surface of the card 21. When ejecting the card 21 from the connector 11, the brake 23 continues to apply a frictional force to the card 21 as indicated by an arrow 25 while slidingly contacting the card 21, to thereby prevent the card 21 from leaping out of the connector 11.

In the conventional card connector 11, however, there may arise a problem that when the frictional force is greater than the force to eject the card 21 achieved by the coil spring 19, the card 21 is not fully ejected and stops inside the connector 11. In view of this, it has been difficult to increase the braking force to thereby suppress the leaping-out of the card 21.

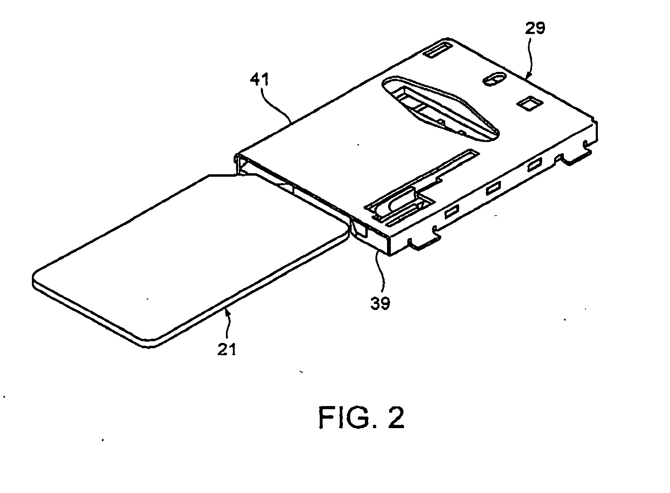

Now, the preferred embodiment of this invention will be described with reference to Figs. 2 to 7.

Referring to Figs. 2 to 7, a card connector 29 according to this embodiment has the W-Push function that alternately repeats loading and ejection of a card 21 in the form of an IC card every time the card is pushed. The connector 29 comprises a housing 39 and a cover frame 41. The housing 39 has a bottom portion 31, side walls 33 and 35, and a rear wall 37 that form a rectangular box-like shape having a " ] "-shape in cross section. The cover frame 41 has a " ] "-shape in cross section and covers the housing 39. A box formed by the housing 39 and the cover frame 41 has a front end where an opening 43 is formed for insertion and removal of the card 21 therethrough. In the following description, the card insertion direction shall be defined as a first direction and, in this first direction, the end of the connector 29 where the opening 43 is formed shall be defined as a front end and its opposite end as a rear end. Further, the width direction of the connector 29 shall be defined as a second direction and its height direction as a third direction, wherein the first, second, and third directions are set perpendicular to each other.

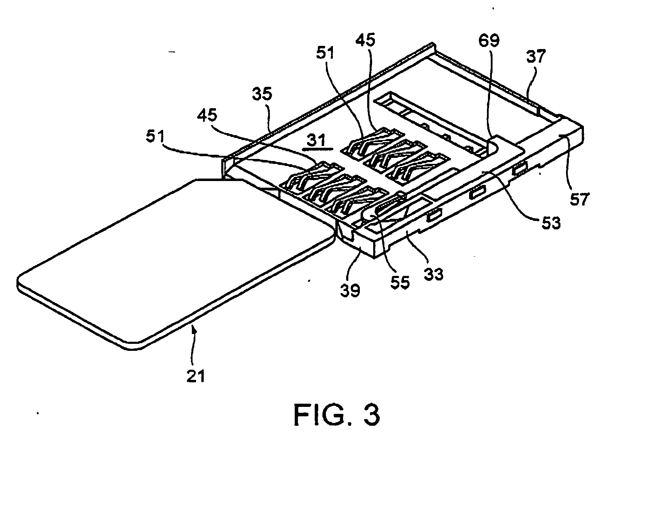

As shown in Fig. 3, the connector 29 further comprises contacts 51 for electrical connection to the card 21. The contacts 51 are provided at the bottom portion 31 of the housing 39 such that contact portions 47 thereof protrude from rectangular mounting holes 45 arrayed in two rows in the second direction. The housing 39 further serves as a guide for the card 21 and an ejecting bar 53.

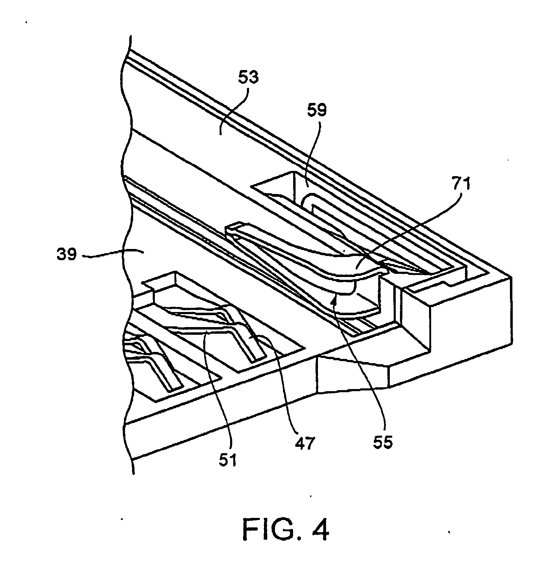

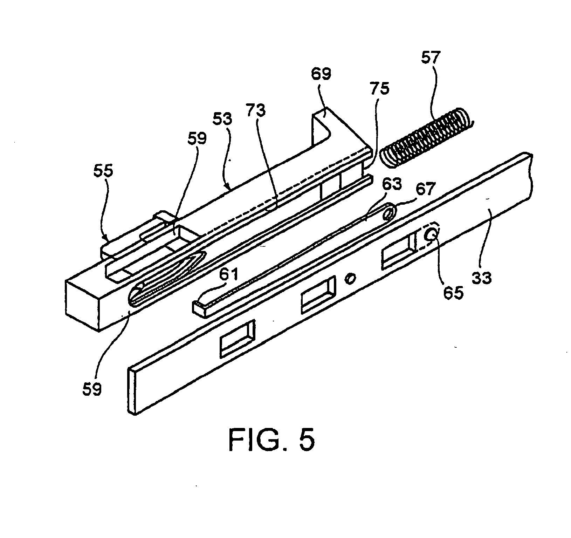

Referring also to Figs. 4 and 5, the connector 29 further comprises, on an inner side of the side wall 33 of the housing 39, the ejecting bar 53 extending in the first direction along an inner surface of the side wall 33, a brake 55 engaging with the ejecting bar 53, and a coil spring 57 (elastic member) biasing the ejecting bar 53 in the first direction toward the front end from the rear end. The ejecting bar 53 is formed with a heart-cam groove 59 at a portion thereof where a base portion of the brake 55 is fixedly received. The heart-cam groove 59 constitutes part of the heart-cam mechanism. The heart-cam mechanism further comprises a cam follower 63 provided between the ejecting bar 53 and the side wall 33 of the housing 39. The cam follower 63 has an inward projecting tip end portion 61 that is inserted into the heart-cam groove 59 on the side of the ejecting bar 53. The cam follower 63 further has at its rear end a hole 67 receiving therein a pin 65 projecting into the inside of the housing 39 through the side wall 33 so that the cam follower 63 is rotatable about the pin 65. For details about the heart-cam mechanism, see paragraphs [0013], [0015], and Fig. 4 of Reference Document 1. In this embodiment, a card ejecting mechanism comprises the ejecting bar 53, the brake 55, the coil spring 57, and the heart-cam mechanism. In Fig. 5, numeral 73 denotes a lateral end of the ejecting bar 53, while numeral 75 denotes a guide groove of the ejecting bar 53.

The ejecting bar 53 is formed into an L-shape so as to have at its rear end a projection 69 that is adapted to engage with an insertion-side end of the card 21. The card 21 is ejected by a biasing force of the coil spring 57 exerted on the ejecting bar 53 that is in direct contact with the card 21.

The brake 55 comprises a pair of springs (contact pieces) 71 as a card retaining portion for sandwiching the card 21 under pressure from upper and lower sides in the figures. The brake 55 is fixed to the ejecting bar 53 and thus moves together with the ejecting bar 53 upon insertion and ejection of the card 21. This allows the card 21 to be prevented from leaping out of the connector 29 when the card 21 is ejected.

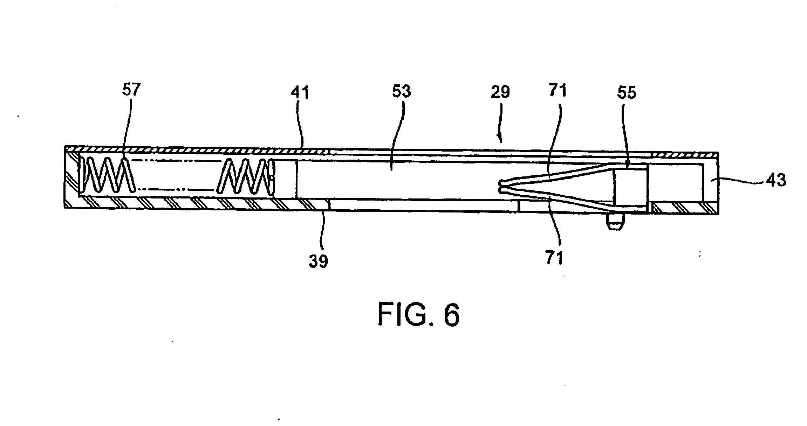

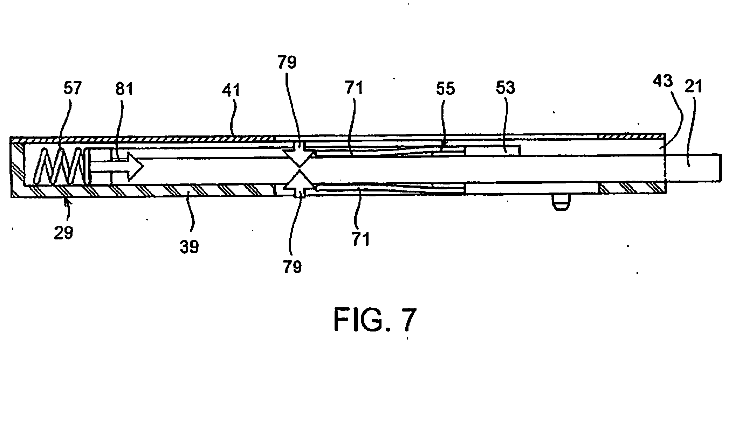

In the brake 55, although the pair of springs 71 have such elastic forces that the springs cause abrasion forces with clipping the card 21 equally from both sides, the card 21 can be clipped to be prevented from leaping out of the connector 29 when inserting or ejecting the card but can not be prevented from ejecting. When the card 21 is inserted through the opening 43 in the state of Fig. 6, the contact pieces 71, arranged in a "<" -shape, of the brake 55 are pushed open to thereby sandwich the card 21 therebetween under pressure as illustrated in Fig. 7. More specifically, as illustrated in Fig. 7, when the card 21 is inserted, the contact pieces 71 of the brake 55 sandwich the card 21 therebetween by applying the same load to the card 21 from upper and lower sides thereof as indicated by arrows 79 and move together with the ejecting bar 53 to a card loading position where the ejecting bar 53 is locked by the heart-cam mechanism so that the card 21 is loaded in the connector 29.

Then, when the card 21 is pushed in the state of Fig. 7, the ejecting bar 53 is unlocked by the heart-cam mechanism so that the ejecting bar 53 along with the card 21 is moved by the biasing force of the coil spring 57 toward the front end as indicated by an arrow 81. Because of being fixed to the ejecting bar 53, the brake 55 moves together with the ejecting bar 53 while sandwiching the card 21 under pressure even during the ejection of the card 21.

Accordingly, since the braking force of the brake 55 does not serve as a frictional force against the biasing force of the coil spring 57 to eject the card 21 via the ejecting bar 53, it is possible to increase the braking force while, at the same time, preventing occurrence of stoppage of the card 21 on the way of its ejection. Further, since the card 21 is constantly sandwiched under pressure, it is possible to prevent the leaping-out of the card 21 during the ejection. Consequently, the ejection of the card 21 can be achieved with high reliability.

As described above, in this embodiment, the card ejecting mechanism is configured to eject the card 21 by the use of the coil spring 57, which is different from the conventional mechanism of ejecting the card via the lever by pushing the button. Therefore, the ejecting bar 53 is prevented from stopping on the way of ejection of the card 21.

Further, in this embodiment, the brake 55 is fixed to the ejecting bar 53 itself serving to eject the card 21, and the card 21 is retained by the brake 55 itself. Therefore, the retaining force of the brake 55 does not function as the frictional force against the force to eject the card 21 so that it is possible to prevent occurrence of ejection failure wherein the card 21 stops on the way of its ejection.

As described above, in the prior art, the brake springs 23 are formed inside the case so that the card is often leaped out from the case or stopped on the way of ejecting the card 21. On the contrary, according to the embodiment, the brake springs 71 are formed at ejecting bar 53 so that the card 21 can not be leaped out from the case or can not be stopped on the way of ejecting the card 21.

In addition, according to this embodiment, it is possible to provide the card connector with high reliance that can prevent both the leaping-out and the ejection failure of the card 21.

In this embodiment, the description has been given about the example wherein the card is the IC card, but it is readily understood that this invention is applicable to so-called electronic cards incorporating electronic circuit elements, not limited to the IC card.

As described above, the card connector according to this invention has high reliability and is applicable to card slots of personal computers, and card connectors of portable mobile terminals, various digital devices, and various electrical and electronic devices.

While this invention has thus far been described in connection with the preferred embodiment thereof, it will be readily possible for those skilled in the art to put this invention into practice in various other manners without departing from the scope set forth in the appended claims.

## Claims

1. A card connector (29) for connection to a card (21), comprising:
a contact (51) for contacting the card;
a housing (39) provided therein with said contact (51); and
an ejecting mechanism for ejecting the card (21) from said card connector (29), said ejecting mechanism comprising:
an ejecting bar (53) coupled to said housing (39) and movable in directions of insertion and ejection of the card;
a cam mechanism coupled to said ejecting bar (53) for controlling an operation of said ejecting bar (53); and
an elastic member (57) constantly biasing said ejecting bar (53) towards the direction of the ejection of the card;
said ejecting bar (57) having a retaining portion (71) for retaining the card and, said ejecting bar moving along with the card with said retaining portion (71) retaining the card (21) when said ejecting bar (57) is operated to eject the card from said card connector,
**characterized in that**
said retaining portion (71) comprises a pair of spring contact pieces and acts to sandwich the card between said spring contact pieces, and
wherein said cam mechanism comprises a heart-cam groove (59) and a cam follower (63) having a first end inserted into said heart-cam groove (59) and a second end which is opposite to said first end.

2. The card connector according to claim 1, wherein said contact (51) is disposed so as to face one surface of the card (21) that is inserted in said card connector.

3. The card connector according to claim 1 or 2, wherein said heart-cam groove (59) is formed on said ejecting bar (57); said second end being rotatably attached to an inner wall of said housing (39).

4. The card connector according to one of claims 1 to 3, wherein said card connector has one surface that is mounted on a board so as to face a surface of said board.

5. The card connector according to one of claims 1 to 4, wherein the card (21) is an IC card.

## Patentansprüche

1. Kartenanschluss (29) zum Verbinden mit einer Karte (21) mit:
einem Kontakt (51) zum Kontaktieren der Karte;
einem Gehäuse (39), das darin mit dem Kontakt (51) versehen ist; und
einem Auswurfmechanismus zum Auswerfen der Karte (21) aus dem Kartenanschluss (29),
wobei der Auswurfmechanismus aufweist:
eine Auswurfleiste (53), die mit dem Gehäuse (39) gekoppelt ist und in Einführ- und Auswurfrichtung der Karte beweglich ist;
einen mit der Auswurfleiste (53) gekoppelten Kurvenmechanismus zum Steuern eines Betriebs der Auswurfleiste (53); und
ein elastisches Element (57), das die Auswurfleiste (53) ständig in Richtung der Auswurfrichtung der Karte vorspannt;
wobei die Auswurfleiste (57) einen Rückhalteabschnitt (71) zum Halten der Karte hat und sich die Auswurfleiste zusammen mit der Karte mit dem die Karte (21) haltenden Rückhalteabschnitt (71) bewegt, wenn die Auswurfleiste (57) betätigt wird, um die Karte aus dem Kartenanschluss auszuwerfen,
**dadurch gekennzeichnet, dass**
der Rückhalteabschnitt (71) ein Paar von Federkontaktstücken aufweist und derart funktioniert, dass er die Karte zwischen den Federkontaktstücken einzwängt, und
wobei der Kurvenmechanismus eine Herzkurvenrille (59) und einen Schlepphebel (63) aufweist, der eine erstes Ende, das in die Herzkurvenrille (59) eingesetzt ist, und ein zweites Ende hat, das dem ersten Ende gegenüberliegt.

2. Der Kartenanschluss nach Anspruch 1, bei dem der Kontakt (51) derart angeordnet ist, dass er einer Oberfläche der in den Kartenanschluss eingesetzten Karte (21) zugewandt ist.

3. Der Kartenanschluss nach Anspruch 1 oder 2, bei dem die Herzkurvenrille (59) an der Auswurfleiste (57) gebildet ist, wobei das zweite Ende drehbar an einer Innenwand des Gehäuses (39) befestigt ist.

4. Der Kartenanschluss nach einem der Ansprüche 1 bis 3, bei dem der Kartenanschluss eine Oberfläche hat, die derart auf einer Platte montiert ist, dass sie einer Oberfläche der Platte zugewandt ist.

5. Der Kartenanschluss nach einem der Ansprüche 1 bis 4, wobei die Karte (21) eine IC-Karte ist.

## Revendications

1. Connecteur de cartes (29) destiné à être connecté à une carte (21), comprenant :
un dispositif de contact (51) pour contacter la carte ;
un boîtier (39) logeant le dispositif de contact (51) ; et
un mécanisme d'éjection destiné à éjecter la carte (21) du connecteur de cartes (29), le mécanisme d'éjection comprenant :
une barre d'éjection (53) couplée au boîtier (39) et mobile dans les directions d'insertion et d'éjection de la carte ;
un mécanisme à came couplé à la barre d'éjection (53) pour commander le fonctionnement de la barre d'éjection (53) ; et
un élément élastique (57) qui incline constamment la barre d'éjection (53) vers la direction de l'éjection de la carte ;
la barre d'éjection (57) comportant une partie de rétention (71) pour retenir la carte et la barre d'éjection se déplaçant avec la carte avec la partie de rétention (71) retenant la carte (21) lorsqu'on fait fonctionner la barre d'éjection (57) pour qu'elle éjecte la carte du connecteur de cartes,
**caractérisé en ce que**
la partie de rétention (71) comprend une paire de pièces de contact à ressort et agit pour prendre en sandwich la carte entre lesdites pièces de contact à ressort, et
le mécanisme à came comprend une rainure de came coeur (59) et un galet de came (63) ayant une première extrémité insérée dans la rainure de came coeur (59) et une seconde extrémité située en face de la première extrémité.

2. Connecteur de cartes selon la revendication 1,
dans lequel le dispositif de contact (51) est orienté vers une surface de la carte (21) insérée dans le connecteur de cartes.

3. Connecteur de cartes selon la revendication 1 ou 2,
dans lequel la rainure de came coeur (59) est formée sur la barre d'éjection (57), la seconde extrémité étant fixée de manière rotative à une paroi intérieure du boîtier (39).

4. Connecteur de cartes selon l'une des revendications 1 à 3,
dans lequel le connecteur de cartes comporte une surface montée sur une planchette pour faire face à une surface de la planchette.

5. Connecteur de cartes selon l'une des revendications 1 à 4,
dans lequel la carte (21) est une carte à circuit intégré.
